(19) Europäisches Patentamt / European Patent Office / Office européen des brevets

(11) **EP 3 222 374 A1**

(12) **EUROPÄISCHE PATENTANMELDUNG**

(43) Veröffentlichungstag:
**27.09.2017 Patentblatt 2017/39**

(51) Int Cl.:
*B22F 3/105* *(2006.01)*    *B23K 26/342* *(2014.01)*

(21) Anmeldenummer: **17160912.6**

(22) Anmeldetag: **14.03.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **21.03.2016 DE 102016105215**

(71) Anmelder: **GEFERTEC GmbH**
**12681 Berlin (DE)**

(72) Erfinder:
- **Fischer, Georg**
  **13589 Berlin (DE)**
- **Röhrich, Tobias**
  **10245 Berlin (DE)**
- **Haschke, Igor**
  **10437 Berlin (DE)**

- **Bastian, Martin**
  **10245 Berlin (DE)**
- **John, Frederik**
  **10317 Berlin (DE)**
- **Piontek, Robert**
  **12161 Berlin (DE)**
- **Riemann, Alexander**
  **01187 Dresden (DE)**
- **Savinov, Alexander**
  **12309 Berlin (DE)**
- **Siegel, Pascale**
  **16341 Panketal (DE)**
- **Johne, Jörg**
  **12557 Berlin (DE)**

(74) Vertreter: **Kaufmann, Sigfrid**
**Kaufmann**
**Patent- und Rechtsanwälte**
**Loschwitzer Straße 42**
**01309 Dresden (DE)**

(54) **BAUPLATTFORMSYSTEM UND VERFAHREN ZUR ADDITIVEN FERTIGUNG EINES FORMKÖRPERS**

(57)    Die Erfindung betrifft ein Bauplattformsystem und ein Verfahren zur additiven Fertigung eines metallischen Formkörpers (3) durch Werkstoffauftrag mittels Lichtbogens auf der Aufbaufläche einer Grundplatte (1) des Bauplattformsystems, wobei in der Aufbaufläche Ausnehmungen (1.1, 1.2) in Form von Einbuchtungen (1.1) oder Durchbrüchen (1.2) eingebracht sind. Die Aufbaufläche der Grundplatte (1) ist mit einer Beschichtung oder einer Auflage aus Schmelzschutzmaterial (2) versehen oder die Grundplatte (1) besteht aus Schmelzschutzmaterial (2). Das Schmelzschutzmaterial (2) ist ein elektrisch leitfähiger, anschmelzunempfindlicher Werkstoff, durch den bei Kontakt mit dem schmelzflüssigen Formkörperwerkstoff das Anschmelzen der Grundplatte (1) und folglich die Haftung des Formkörper (3) an der Grundplatte (1) aufgrund der Bildung von Legierungen oder intermetallischen Phasen verhindert ist. Dadurch ist bei Verwendung des Bauplattformsystems die additive Fertigung von Formkörpern (3) mit hoher Endkonturgenauigkeit und leichter Ablösbarkeit von der Grundplatte (1) gewährleistet. Kostenintensive Trennoperationen nach der additiven Fertigung können entfallen.

EP 3 222 374 A1

Fig. 2

**Beschreibung**

Die Erfindung betrifft ein Bauplattformsystem zur additiven Fertigung eines Formkörpers durch Werkstoffauftrag mittels Lichtbogens aus einem metallischen Werkstoff, z. B. einer Legierung, sowie ein Verfahren zur additiven Fertigung.

Durch die additive Fertigung, auch als generative Fertigung oder 3D-Drucken bekannt, können aus z. B. pulver- oder drahtförmigen Ausgangswerkstoffen Formkörper bzw. Bauteile mit komplexer dreidimensionaler Gestalt gefertigt werden. Auf den Anlagen zur additiven Fertigung erfolgt dabei die Herstellung der Bauteile direkt aus computergenerierten Konstruktionsdaten. Die additiven Fertigungstechnologien ermöglichen eine sehr schnelle Umsetzung virtuell generierter Bauteilgeometrien in reale Formkörper. Die endkonturnahe Herstellung der Bauteile erspart zudem kostenintensive spanende Bearbeitungsschritte.

Die additive Fertigung erfolgt üblicherweise auf einer Bauplattform, auf der der Formkörper lagenweise aufgebaut wird. Die Bauplattform erfüllt vor allem eine Stützfunktion und bildet die Grundlage dafür, dass die Gestalt des gefertigten Formkörpers dem des virtuell konstruierten Bauteils entspricht. Abweichung treten z. B. durch die Schrumpfung bei Erstarrung und Abkühlung von schmelzflüssig aufgetragenen Ausgangsmaterialien auf.

In GB 2500412 A ist eine Bauplattform zur additiven Fertigung mit einer strukturierten Oberfläche beschrieben. Die Strukturierung verfolgt den Zweck, die Schrumpfung des Formkörpers bei Fertigung gezielt zuzulassen, um Eigenspannungen im Bauteil gering zu halten. Nachteilig ist jedoch, dass die Bauteile nur bedingt formgetreu zum virtuellen Vorbild gefertigt werden können. Eine hochgenaue endkonturnahe Fertigung von Bauteilen mit komplexer dreidimensionaler Gestaltung ist damit selbst bei Kenntnis des Schrumpfverhaltens des Formkörperstoffs nicht erreichbar.

In WO 2014 137890 A1 ist ein Fertigungssystem, bestehend aus einer additiven Fertigungsvorrichtung und einer beweglichen Bauplattform, sowie ein Verfahren zur Herstellung additiv gefertigter Bauteile offenbart. Die Bauplattform weist Befestigungselemente auf der Aufbaufläche und Indexmarkierungen in Form eingesteckter Stifte an den Seitenflächen der Bauplattform auf. Die Befestigungselemente und Indexmarkierungen werden zur messtechnischen Lageerfassung beim nachträglichen Entfernen des additiv gefertigten Formkörpers durch ein abtragendes Fertigungsverfahren verwendet. Der Formkörper wird konventionell durch trennende Verfahren von der Bauplattform entfernt.

Ein wesentlicher Nachteil der aus dem Stand der Technik bekannten Bauplattformen ist, dass zu Beginn der additiven Fertigung eine flächige, stoffschlüssige Verbindung zwischen dem gefertigten Bauteil und der Bauplattform geschaffen wird. Dadurch wird ein zusätzlicher Aufwand zum Entfernen des Formkörpers von der Bauplattform - üblicherweise mit spanenden Trennverfahren - verursacht.

Aus WO 2014/172496 A1 ist eine Bauplattform mit einer nichtmetallischen Oberflächenbeschichtung aus oxidischer oder silikatischer Keramik bekannt. Diese Oberflächenbeschichtung dient zur Begrenzung des Wärmeeintrags in die Bauplattform, wodurch z. B. Verzüge vermieden werden sollen, und zur Reduktion des Aufwandes beim Trennen des gefertigten Formkörpers von der Bauplattform. In der Bauplattform sind außerdem Anker mit einer metallischen Oberfläche eingebracht, an denen die erste Formkörperlage des aus Pulver gefertigten metallischen Formkörpers angebunden wird. Die Anker und die Bauplattformoberfläche bilden eine ebene Fläche aus.

Diese Lösung zur Überwindung der stoffschlüssigen Verbindung zwischen Bauteil und Bauplattform ist jedoch nur für additive Fertigungsverfahren unter Verwendung von pulverförmigen Ausgangswerkstoffen, z. B. Pulverbettverfahren, anwendbar.

Aufgabe der Erfindung ist es, eine Bauplattform zur additiven Fertigung sowie ein Verfahren zur additiven Fertigung bereitzustellen, durch die die Herstellung von Formkörpern durch Werkstoffauftrag mittels Lichtbogens mit hoher Endkonturgenauigkeit möglich ist, wobei der Formkörper während seiner Fertigung sicher fixiert und nach Abschluss der Fertigung leicht, d. h. mit nur geringem technischen Aufwand, von der Bauplattform ablösbar sein soll.

Erfindungsgemäß wird die vorstehend genannte Aufgabe mit einem Bauplattformsystem nach Patentanspruch 1 und einem Verfahren nach Patentanspruch 11 gelöst; zweckmäßige Ausgestaltungen der Erfindung finden sich in den Unteransprüchen.

Nach Maßgabe der Erfindung wird ein Bauplattformsystem zur additiven Fertigung eines Formkörpers aus einem metallischen Formkörperwerkstoff bereitgestellt. Das Bauplattformsystem weist eine Grundplatte mit einer Aufbaufläche auf, auf der der schmelzflüssige Formkörperwerkstoff lagenweise mittelbar oder unmittelbar durch Werkstoffauftrag mittels Lichtbogens aufgebracht wird. In die Grundplatte sind im Bereich der Aufbaufläche eine Mehrzahl von Ausnehmungen, z. B. in Form von Einbuchtungen oder Durchbrüchen, eingebracht.

Erfindungsgemäß ist die Aufbaufläche mit einer Beschichtung oder einer Auflage aus Schmelzschutzmaterial versehen; alternativ besteht die Grundplatte vollständig aus Schmelzschutzmaterial. Das Schmelzschutzmaterial ist ein elektrisch leitfähiger, anschmelzunempfindlicher Werkstoff. Die Anschmelzunempfindlichkeit wird durch die Schmelztemperatur und den Wärmeeindringkoeffizienten des Schmelzschutzmaterials bei Normalbedingungen bestimmt und errechnet sich wie folgt:

$$\text{Anschmelzunempfindlichkeit} \, / \, kg \cdot s^{-2,5} \cdot K^{-1}$$

$$= \text{Schmelztemperatur} \, / \, °C \times \text{Wärmeeindringkoeffizient} \, / \, kg \cdot s^{-2,5} \cdot K^{-1}$$

Erfindungsgemäß ist die Anschmelzunempfindlichkeit des Schmelzschutzmaterials größer als $30 \cdot 10^6$ $°C \cdot kg \cdot s^{-2,5} \cdot K^{-1}$.

Durch das Schmelzschutzmaterials wird verhindert, dass es bei Kontakt mit dem schmelzflüssigen Formkörperwerkstoff zur Legierungsbildung oder Bildung intermetallischer Phasen kommt und der Formkörper fest an der Grundplatte haftet.

In der Variante, dass die gesamte Grundplatte aus Schmelzschutzmaterial besteht, kann dieses Kupfer, eine Kupferlegierung, Wolfram, Tantal oder Hartmetall sein. Diese Werkstoffe eignen sich als Schmelzschutzmaterial besonders, da sie neben einem hohen Wärmeeindringkoeffizienten oder einem hohen Schmelzpunkt außerdem einen hohen Verschleißwiderstand gegenüber dem erosiv wirkenden Lichtbogen aufweisen. Die Grundplatte aus einem dieser Schmelzschutzmaterialien ist daher auch nach vielfachem Gebrauch für die additive Fertigung einsetzbar.

Ebenso ist es möglich, eine fest haftende Beschichtung auf der Aufbaufläche der Grundplatte zum Beispiel durch thermisches Spritzen aufzubringen. Hierzu eignen sich Werkstoffe wie Molybdän oder WC/Co als Schmelzschutzmaterial. Mit Verwendung dieser Beschichtungen ist neben der Anschmelzunempfindlichkeit eine hohe Verschleißbeständigkeit gegeben und damit der Dauergebrauch der Grundplatte sichergestellt.

Weiterhin kann vorgesehen sein, dass das Schmelzschutzmaterial in Form einer temporär beständigen Beschichtung auf die Aufbaufläche aufgebracht ist. Diese Art der Beschichtung wirkt während der additiven Fertigung des Formkörpers als Schmelzschutzschicht und wird beim Entfernen des Formkörpers von der Grundplatte zerstört. Vor jedem additiven Aufbau eines Formkörpers ist die Grundplatte bei dieser Variante neu zu beschichten. Geeignet als Schmelzschutzmaterial hierfür ist z. B. Graphit, der mittels Lackierens oder als Pulverbeschichtung auf die Aufbaufläche aufgetragen wird. Die Anwendung einer solchen "verlorenen" Beschichtung garantiert - aufgrund der Neuapplikation jeweils direkt vor dem additiven Fertigungsprozess - eine immer gleichbleibende Anschmelzunempfindlichkeit; dauerhafte Beständigkeit der Beschichtung gegen erosive Beanspruchung durch den Lichtbogen ist hierbei entbehrlich.

Es ist zudem möglich, dass eine Auflage aus Schmelzschutzmaterial in Form eines Fein- oder Feinstbleches auf die Aufbaufläche der Grundplatte aufgebracht ist. Geeignet sind z. B. Bleche aus Kupferlegierungen- bei additiver Fertigung von Formkörpern aus Stahl- oder Nickel-Basis-Werkstoffen.

Da das Schmelzschutzmaterial mit dem Formkörperwerkstoff nur begrenzt metallurgisch reaktionsfähig ist, wird die Bildung einer stoffschlüssigen Verbindung zwischen Grundplatte und Formkörper verhindert. Die elektrische Leitfähigkeit des Schmelzschutzmaterials gewährleistet die Ausbildung des Lichtbogens im gesamten Bereich der Aufbaufläche.

Zur Fixierung des Formkörpers und zur Aufnahme von lateralen Spannungen im Formkörper dienen die in die Ausnehmungen der Grundplatte eingefügten Einsatzelemente, die aus der Aufbaufläche der Grundplatte herausragen, bündig mit dieser abschließen oder gegenüber der Aufbaufläche zurückgesetzt sind, sodass eine Restausnehmung verbleibt. Die Einsatzelemente bestehen aus artgleichem Werkstoff wie der Formkörper. Während der additiven Fertigung werden die Einsatzelemente auf- bzw. angeschmolzen und dabei stoffschlüssig mit dem Formkörper verbunden. Nach Ausbildung der ersten Formkörperlage ist diese mit den in die Ausnehmungen der Grundplatte eingefügten Einsatzelementen fest verbunden. Damit ist der Formkörper lateral auf der Auflagefläche fixiert. Besonders geeignet als Einsatzelemente sind zylinderförmige Stifte, die in Ausnehmungen in Form von Durchgangsbohrungen eingebracht sind.

Die Einsatzelemente können auf verschiedene Weise in die Grundplatte eingefügt sein, um ein leichtes Herausfallen vor oder zu leichtes Herausziehen während der additiven Fertigung zu vermeiden. Es ist möglich, die Einsatzelemente vor dem Einbringen in die Ausnehmungen abzukühlen, z. B. in flüssigem Stickstoff, oder alternativ die Grundplatte zu erwärmen. Nach dem Einbringen der Einsatzelemente in die Ausnehmungen bildet sich eine Presspassung aus, die die Einsatzelemente gegen Herausfallen sichert. Andere Möglichkeiten bestehen darin, dass die Einsatzelemente mittels eines verdichtungsfähigen, elektrisch leitfähigen Füllpulvers in die Ausnehmungen eingepresst oder mittels eines Zusatzeinsatzelementes eingefügt sind. Letztere Variante bietet den Vorteil, dass schräg zur Aufbaufläche orientiere Einsatzelemente in die Grundplatte eingebracht werden können. Die Einsatzelemente können außerdem formschlüssig in der Grundplatte eingesetzt sein, indem zum Beispiel die Durchbrüche eine sich konisch verjüngende Form in Richtung Aufbaufläche aufweisen.

Die Einsatzelemente können eine Sollbruchstelle aufweisen. Zum Entfernen des Formkörpers werden die mit dem Formkörper stoffschlüssig verbunden Einsatzelemente im Bereich der Sollbruchstelle abgebrochen und der Formkörper wird von der Bauplattform abgehoben.

Erfindungsgemäß wird die additive Fertigung von Formkörpern unter Verwendung von Einsatzelementen im Bauplattformsystem wie folgt durchgeführt:

Zunächst werden in vorzugsweise mehrere, mindestens jedoch zwei, Ausnehmungen in der Grundplatte jeweils ein Einsatzelement eingefügt und die so präparierte Grundplatte innerhalb einer Vorrichtung zur additiven Fertigung eingebaut. Nach Zündung des Lichtbogens wird der Formkörperwerkstoff im Lichtbogen aufgeschmolzen und lagenweise auf die Aufbaufläche der Grundplatte aufgetragen. Dabei wird der artgleiche Werkstoff der Einsatzelemente auf- oder angeschmolzen und es erfolgt eine stoffschlüssige Verbindung des Formkörpers mit den Einsatzelementen. Nach Abschluss des Aufbaus des Formkörpers wird dieser von der Grundplatte abgehoben und die aus dem Formkörper herausragenden Einsatzelemente abgetrennt. Hierbei werden die Einsatzelemente partiell in den Formkörper integriert.

Die Vorteile der Erfindung sind, dass durch die laterale Fixierung der ersten Formkörperlage die exakte Fertigung mit hoher Endkonturgenauigkeit möglich ist, und durch die leichte Ablösbarkeit des Formkörpers von Grundplatte aufwendige Trennoperationen im Anschluss an die additive Fertigung entfallen.

Im Weiteren wird auf spezifische Ausgestaltungen der Erfindung eingegangen.

Die Grundplatte des Bauplattformsystems kann aktiv temperierbar sein. Hierzu können in die Grundplatte Wärmefluidkanäle integriert sein, durch die vor, während oder nach dem Werkstoffauftrag ein Wärmefluid strömt, mittels dessen - je nach Anforderung an den Fertigungsprozess - die Grundplatte gekühlt oder beheizt wird. Damit können Eigenspannungen im Formkörper gezielt beeinflusst werden, die bei der additiven Fertigung durch Erstarren und Abkühlen des Formkörperwerkstoffs entstehen.

Ferner kann das Bauplattformsystem mit einer Ausbohrvorrichtung oder einer Drückvorrichtung ausgestattet sein, die jeweils an der der Aufbaufläche gegenüberliegenden Seite der Grundplatte installiert ist. Mittels der Ausbohrvorrichtung oder der Drückvorrichtung wird der Formkörper nach Abschluss der additiven Fertigung von der Grundplatte abgelöst. Dazu wird der durch die Einsatzelemente in den Ausnehmungen an der Grundplatte verankerte Formkörper ausgebohrt oder herausgedrückt. Die Installation der Ausbohrvorrichtung oder alternativ der Drückvorrichtung gewährleistet ein besonders schnelles Ablösen des Formkörpers von der Grundplatte nach Beendigung des additiven Fertigungsprozesses.

Die Erfindung wird anhand des nachfolgenden Ausführungsbeispiels mit Bezug auf die schematischen Zeichnungen näher erläutert. Dazu zeigen

Fig. 1:    das Bauplattformsystem zur additiven Fertigung in der Schnittdarstellung,
Fig. 2:    das Bauplattformsystem mit partiell aufgebautem Formkörper in der Schnittdarstellung,
Fig. 3:    ein mit Füllpulver in die Grundplatte eingepresstes Einsatzelement in der Schnittdarstellung,
Fig. 4:    ein mit Zusatzeinsatzelement in die Grundplatte eingefügtes Einsatzelement in der Schnittdarstellung,
Fig. 5:    das Bauplattformsystem mit Ausbohrvorrichtung zum Zeitpunkt vor dem Ausbohren des Formkörpers in der Schnittdarstellung,
Fig. 6:    das Bauplattformsystem mit Ausbohrvorrichtung zum Zeitpunkt nach dem Ausbohren des Formkörpers in der Schnittdarstellung,
Fig. 7:    das Bauplattformsystem mit Drückvorrichtung zum Zeitpunkt vor dem Herausdrücken des Formkörpers in der Schnittdarstellung,
Fig. 8:    das Bauplattformsystem mit Drückvorrichtung zum Zeitpunkt nach dem Herausdrücken des Formkörpers in der Schnittdarstellung.
Fig. 9:    ein Einsatzelement mit Sollbruchstelle in der Grundplatte zum Zeitpunkt vor dem Herausbrechen in der Schnittdarstellung, und
Fig. 10:   ein Einsatzelement mit Sollbruchstelle in der Grundplatte zum Zeitpunkt des Herausbrechens in der Schnittdarstellung,

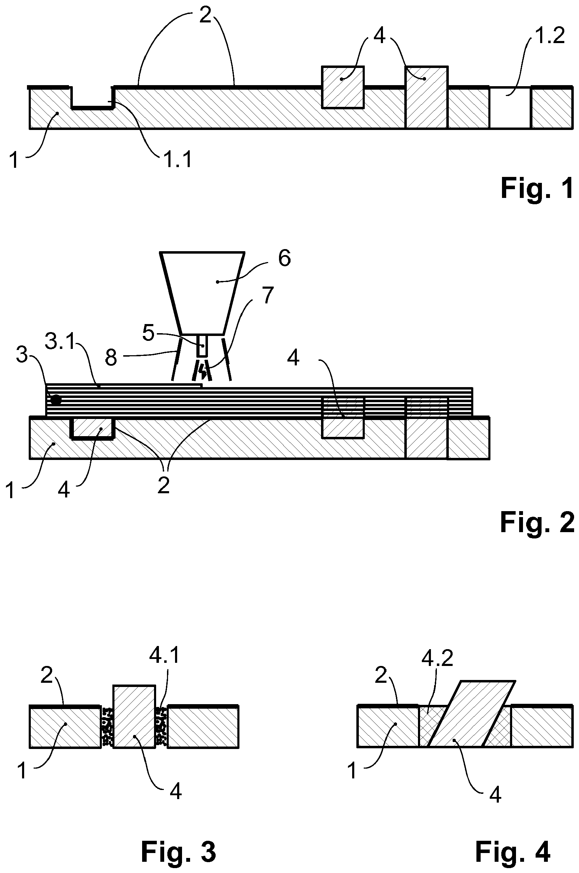

Die vollständig aus Schmelzschutzmaterial 2 bestehende Grundplatte 1 entsprechend Figur 1 weist die Einbuchtung 1.1 und den Durchbruch 1.2 auf. Beide Ausnehmungen 1.1, 1.2 sind als Bohrungen in die Grundplatte 1 eingebracht. In zwei derartige Ausnehmungen (nicht gekennzeichnet) sind die Einsatzelemente 4 eingefügt. Als Schmelzschutzmaterial 2 wird Kupfer verwendet.-

Figur 2 zeigt den Prozess der additiven Fertigung des Formkörpers 3 auf dem Bauplattformsystem. In alle Ausnehmungen wurde jeweils ein Einsatzelement 4 eingesetzt. Mittels des Schweißbrenners 6 wird der Schweißdraht 5 aus metallischem Formkörperwerkstoff im Lichtbogen 7 abgeschmolzen und der schmelzflüssige Formkörperwerkstoff lagenweise auf der Grundplatte 1 aufgetragen, wobei sich sukzessiv die Formkörperlagen 3.1 ausbilden. Der Bereich um den im Lichtbogen 7 abschmelzenden Schweißdraht 5 wird zur Vermeidung negativer Einflüsse aus der Umgebungsatmosphäre mit dem Schutzgas 8 abgeschirmt.

Durch das Auftragen der Formkörperlagen 3.1 bildet sich der Formkörper 3 aus. Verdeutlicht wird dieser Aufbau anhand des in der Figur 2 gezeigten, partiell fertiggestellten Formkörpers 3. Nach der Ausbildung des Formkörpers 3 sind die Einsatzelemente 4 stoffschlüssig mit dem Formkörper 3 verbunden. Das Schmelzschutzmaterial 2 zwischen Formkörper 3 und Grundplatte 1 gewährleistet beim späteren Entfernen des Formkörpers 3 von der Grundplatte 1 das leichte Ablösen desselben.

Die Einsatzelemente 4 können auf verschiedene Weise in die Grundplatte 1 eingefügt sein. Die Möglichkeiten umfassen kraftschlüssig nach Abkühlen in flüssigen Stickstoff eingebrachte Einsatzelemente 4, mittels Füllpulver 4.1 eingepresste Einsatzelemente 4 (Figur 3) oder die Verwendung von Zusatzeinsatzelementen 4.2 (Figur 4). Im letzteren Fall sind schräg ausgerichtete Einsatzelemente 4 anwendbar.

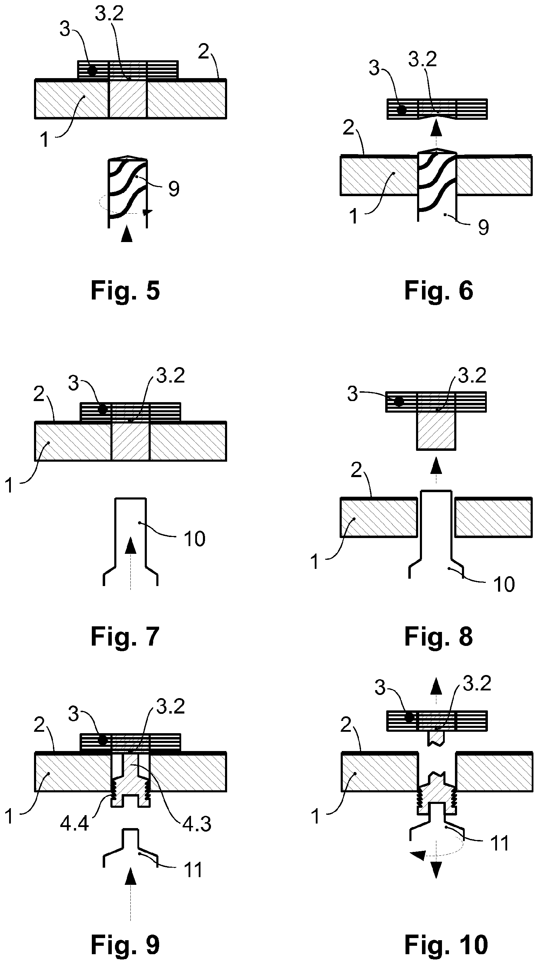

Zum schnellen Entfernen des Formkörpers 3 ist die Integration der Ausbohrvorrichtung 9 (Figur 5 und 6) oder der Drückvorrichtung 10 (Figur 7 und 8) in das Bauplattformsystem möglich. Die Ausbohrvorrichtung 9 (Figur 5) oder die Drückvorrichtung 10 (Figur 7) sind dazu unterhalb der Grundplatte 1 installiert. Der Formkörper 3 wird an der Position der mit dem Formkörper 3 stoffschlüssig verbundenen Einsatzelemente 3.2 entweder aus der Grundplatte 1 ausgebohrt (Figur 6) oder herausgedrückt (Figur 8).

Das in den Figuren 9 und 10 dargestellte, mit dem Formkörper 3 stoffschlüssig verbundene Einsatzelement 3.2 weist das Gewinde 4.4 und eine Sollbruchstelle 4.3 auf und wurde vor dem Auftragen des Formkörperwerkstoffes in die Grundplatte 1 eingeschraubt. Durch das Aufbringen eines Torsionsmomentes beim Herausdrehen mittels des Schraubendrehers 11 erfolgt die Trennung an der Sollbruchstelle 4.3 und der Formkörper 3 kann von der Bauplattform abgehoben werden.

Bezugszeichenliste

| | |
|---|---|
| 1 | Grundplatte |
| 1.1 | Ausnehmung / Einbuchtung |
| 1.2 | Ausnehmung / Durchbruch |
| 2 | Schmelzschutzmaterial |
| 3 | Formkörper, additiv gefertigt |
| 3.1 | Formkörperlage |
| 4 | Einsatzelement |
| 4.1 | Füllpulver |
| 4.2 | Zusatzeinsatzelement |
| 4.3 | Sollbruchstelle |
| 4.4 | Gewinde |
| 5 | Schweißdraht |
| 6 | Schweißbrenner |
| 7 | Lichtbogen |
| 8 | Schutzgas |
| 9 | Ausbohrvorrichtung |
| 10 | Drückvorrichtung |
| 11 | Schraubendreher |

**Patentansprüche**

1. Bauplattformsystem zur additiven Fertigung eines Formkörpers (3) aus einem metallischen Formkörperwerkstoff durch Werkstoffauftrag mittels Lichtbogens, umfassend eine Grundplatte (1), wobei

   - die Grundplatte (1) eine Aufbaufläche aufweist, die bei der additiven Fertigung den schmelzflüssigen Formkörperwerkstoff mittelbar oder unmittelbar kontaktiert,
   - die Grundplatte (1) auf der Aufbaufläche mehrere Ausnehmungen (1.1, 1.2) aufweist, in die den im Aufbau befindlichen Formkörper (3) fortwährend fixierende Einsatzelemente (4) aus artgleichem Werkstoff wie der Formkörper (3) eingefügt sind,
   - die Aufbaufläche mit einer Beschichtung oder einer Auflage aus Schmelzschutzmaterial (2) versehen ist oder die Grundplatte (1) aus Schmelzschutzmaterial (2) besteht, und
   - das Schmelzschutzmaterial (2) ein elektrisch leitfähiger Werkstoff ist, dessen Anschmelzunempfindlichkeit, beschrieben durch das Produkt der Werkstoffkennwerte Schmelztemperatur und Wärmeeindringkoeffizient-bei Normalbedingungen, größer als $30 \cdot 10^6$ °C·kg·s$^{-2,5}$·K$^{-1}$ ist.

2. Bauplattformsystem nach Anspruch 1, **dadurch gekennzeichnet, dass** die Ausnehmungen (1.2) Durchgangsbohrungen sind.

3. Bauplattformsystem nach Anspruch 1 oder 2, **dadurch gekennzeichnet, dass** Wärmefluidkanäle in die Grundplatte (1) integriert sind, wodurch diese aktiv temperierbar ist.

4. Bauplattformsystem nach einem der Ansprüche 1 bis 3, **dadurch gekennzeichnet, dass** das Schmelzschutzmaterial (2) Kupfer, eine Kupferlegierung, Wolfram, Tantal, Hartmetall oder Graphit ist.

5. Bauplattformsystem nach einem der Ansprüche 1 bis 3, **dadurch gekennzeichnet, dass** die Auflage aus Schmelzschutzmaterial (2) ein Fein- oder Feinstblech ist.

6. Bauplattformsystem nach einem der Ansprüche 1 bis 5, **dadurch gekennzeichnet, dass** die in die Ausnehmungen (1.1, 1.2) der Grundplatte (1) eingefügten, den im Aufbau befindlichen Formkörper (3) fortwährend fixierenden Einsatzelemente (4) bündig mit der Aufbaufläche der Grundplatte (1) abschließen, .

7. Bauplattformsystem nach Anspruch 6, **dadurch gekennzeichnet, dass** die Einsatzelemente (4) in ein in die Ausnehmungen (1.1, 1.2) eingebrachtes Füllpulver (4.1) aus einem elektrisch leitfähigen Material eingepresst sind.

8. Bauplattformsystem nach einem der Ansprüche 1 bis 6, **dadurch gekennzeichnet, dass** die Einsatzelemente (4) mit Zusatzeinsatzelementen (4.2) fixiert sind.

9. Bauplattformsystem nach einem der Ansprüche 1 bis 6, **dadurch gekennzeichnet, dass** die Einsatzelemente (4) eine Sollbruchstelle (4.3) aufweisen.

10. Bauplattformsystem nach einem der Ansprüche 1 bis 8, **dadurch gekennzeichnet, dass** eine Ausbohrvorrichtung (9) oder eine Drückvorrichtung (10) zum Lösen des in den Ausnehmungen (1.1, 1.2) verankerten Formkörpers (3) an der der Aufbaufläche gegenüberliegenden Seite der Grundplatte (1) angeordnet ist.

11. Verfahren zur additiven Fertigung eines Formkörpers (3) unter Verwendung des Bauplattformsystems nach einem der Ansprüche 1 bis 10, **dadurch gekennzeichnet, dass**

a) mehrere Einsatzelemente (4) in die Grundplatte (1) eingebracht werden,
b) der metallische Formkörperwerkstoff durch Werkstoffauftrag mittels Lichtbogens unter Ausbildung des Formkörpers (3) lagenweise auf die Aufbaufläche aufgetragen wird, wobei alle Einsatzelemente (4) stoffschlüssig mit dem Formkörper (3) verbunden werden, und
c) nach Fertigstellung des Formkörpers (3) die aus dem Formkörper (3) herausragenden Einsatzelemente (4) abgetrennt werden.

**Fig. 1**

**Fig. 2**

**Fig. 3**

**Fig. 4**

**Fig. 5**

**Fig. 6**

**Fig. 7**

**Fig. 8**

**Fig. 9**

**Fig. 10**

Europäisches
Patentamt

European
Patent Office

Office européen
des brevets

**EUROPÄISCHER RECHERCHENBERICHT**

Nummer der Anmeldung

EP 17 16 0912

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2009/047439 A1 (WITHERS JAMES C [US] ET AL) 19. Februar 2009 (2009-02-19) * Anspruch 1 * * Absätze [0119], [0125] * * Abbildungen 1-8 * ----- | 1-11 | INV. B22F3/105 B23K26/342 |
| Y A | JP 2012 224906 A (PANASONIC CORP) 15. November 2012 (2012-11-15) * Anspruch 1 * * Absätze [0005], [0055] - [0061] * * Abbildungen 13, 14 * ----- | 1,3-9,11 2,10 | |
| Y,D A | WO 2014/172496 A1 (UNITED TECHNOLOGIES CORP [US]) 23. Oktober 2014 (2014-10-23) * Anspruch 1 * * Seite 2, Zeilen 3-12 * * Seite 6, Zeilen 31-34 * * Seite 7, Zeilen 1-34 * * Abbildungen 1-4 * ----- | 1,2,6-11 3-5 | |
| A | US 2011/241947 A1 (SCOTT SIMON PETER [GB] ET AL) 6. Oktober 2011 (2011-10-06) * Anspruch 1 * * Absätze [0031], [0032] * * Abbildungen 2-4, 6 * ----- | 1,4,11 | RECHERCHIERTE SACHGEBIETE (IPC) B22F B23K |
| A | GB 2 521 191 A (EXMET AB [SE]) 17. Juni 2015 (2015-06-17) * Abbildungen 1-2 * ----- | 3 | |

Der vorliegende Recherchenbericht wurde für alle Patentansprüche erstellt

| Recherchenort | Abschlußdatum der Recherche | Prüfer |
|---|---|---|
| Den Haag | 18. August 2017 | Traon, Nicolas |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
..........................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 16 0912

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-08-2017

| Im Recherchenbericht angeführtes Patentdokument | Datum der Veröffentlichung | Mitglied(er) der Patentfamilie | Datum der Veröffentlichung |
|---|---|---|---|
| US 2009047439 A1 | 19-02-2009 | EP 2183066 A1<br>US 2009047439 A1<br>WO 2009023682 A1 | 12-05-2010<br>19-02-2009<br>19-02-2009 |
| JP 2012224906 A | 15-11-2012 | JP 5535121 B2<br>JP 2012224906 A | 02-07-2014<br>15-11-2012 |
| WO 2014172496 A1 | 23-10-2014 | CN 105142827 A<br>EP 2986406 A1<br>JP 2016521315 A<br>US 2016144428 A1<br>WO 2014172496 A1 | 09-12-2015<br>24-02-2016<br>21-07-2016<br>26-05-2016<br>23-10-2014 |
| US 2011241947 A1 | 06-10-2011 | CA 2743678 A1<br>CN 102196893 A<br>EP 2349683 A2<br>JP 5632381 B2<br>JP 2012506803 A<br>RU 2011121403 A<br>US 2011241947 A1<br>WO 2010049696 A2 | 06-05-2010<br>21-09-2011<br>03-08-2011<br>26-11-2014<br>22-03-2012<br>10-12-2012<br>06-10-2011<br>06-05-2010 |
| GB 2521191 A | 17-06-2015 | CN 106062899 A<br>EP 3080820 A1<br>GB 2521191 A<br>JP 2017510054 A<br>US 2016307678 A1<br>WO 2015086705 A1 | 26-10-2016<br>19-10-2016<br>17-06-2015<br>06-04-2017<br>20-10-2016<br>18-06-2015 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 2500412 A
- WO 2014137890 A1
- WO 2014172496 A1